# EUROPEAN PATENT SPECIFICATION

(11) **EP 0 495 122 B1**
(45) Date of publication and mention of the grant of the patent: **06.11.1996**
(21) Application number: 91913674.7
(22) Date of filing: 02.08.1991
(51) Int. Cl.: B62D 55/24, B62D 55/20

(54) **CORE METAL FOR RUBBER CRAWLER AND CRAWLER DEVICE**
KERMETALL FÜR GUMMIGLEISKETTEN UND GLEISKETTENVORRICHTUNG
NOYAU METALLIQUE POUR CHENILLE EN CAOUTCHOUC ET DISPOSITIF A CHENILLE

(30) Priority: 08.08.1990 JP 84389/90 U; 22.11.1990 JP 122588/90 U
(43) Date of publication of application: 22.07.1992
(73) Proprietor: FUKUYAMA GOMU KOGYO KABUSHIKI KAISHA, Fukuyama-shi, Hiroshima-ken 720 (JP)
(72) Inventor: KATOH, Yusaku, 2801-4, Yamate-cho, Hiroshima-ken 720 (JP)
(74) Representative: Blumbach, Kramer & Partner
(86) International application number: PCT/JP91/01039
(87) International publication number: WO 92/02399

(56) References cited:
- EP-A- 0 428 725
- JP-U- 0 240 683
- JP-U- 0 335 883
- JP-U- 2 142 390
- JP-U- 2 142 391
- JP-U-57 176 380
- JP-Y- 0 226 781

## Description

The present invention provides a novel core bar member which is used for rubber crawlers in transportable type construction equipments, and relates to a rubber crawler in which plural core bar members are concealed in the inner circumferential face of the rubber crawler under specified conditions.

Many of construction equipments in which steel-made caterpillar and rubber crawler are concurrently utilized as wheels thereof have been recently available in the market.

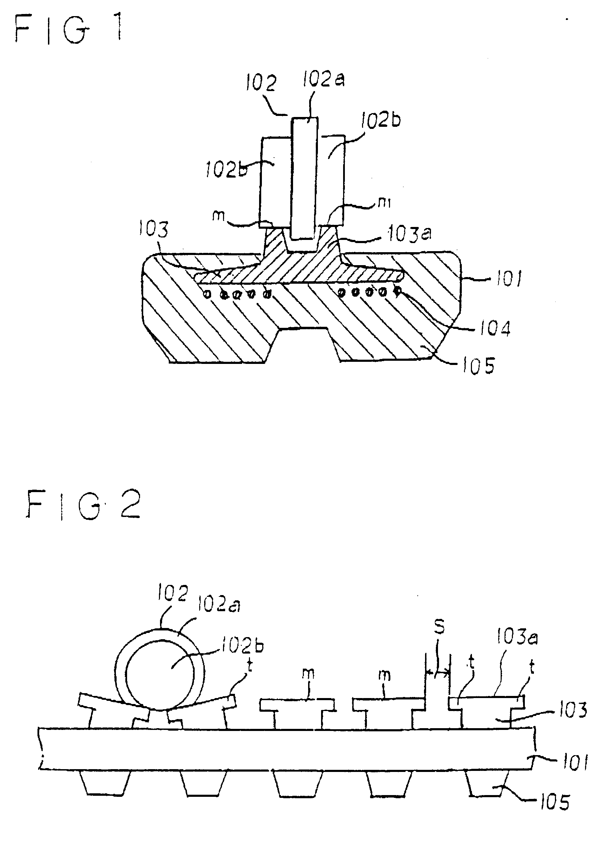

FIG. 1 shows one of the examples of a rubber crawler of the above-mentioned concurrent type and is a cross sectional view in the width direction thereof, showing the relationship between the rubber crawler and rolling wheel. 101 is a rubber crawler, 102 is a rolling wheel, 102a is a middle wheel, 102b is a side wheel, 103 is a core bar member, 103a and m are a projection and top face of the core bar member 103, respectively, 104 is a steel cord, and 105 is a lug. To the contrary, FIG. 2 is a side view in the circumferential direction showing the relationship with the rolling wheel 102 as well. t is a protruding part of the projection 103a, and s is the interval between core bar members 103. As shown in the drawing, protruding parts t, t are provided at the front and rear parts of the projection 103a, thereby causing the core bar member to be T-shaped, and the top face m thereof will be a rolling track with which the side wheel 102b is brought into contact.

In the above mentioned conventional rubber crawler, the side wheel 102b of the rolling wheel 102 is brought into contact with the top face m of the projection 103a so that the base rubber material will not be damaged to cause the durability thereof to be made good. However, on the other hand, as drop or sinking of the rolling wheel 102 is resulting from between the front and rear core bar members, its running vibration would be made large. Therefore, in order to improve the above point, there is a proposal which intends to lessen the drop or sinking of the rolling wheel 102 by narrowing the interval s between the core bar members 103 by making a projection 103a of the core bar member T-shaped to provide it with protruding parts. But, in this case, as shown in FIG. 2, as the protruding part t drops or sinks due to the load when the rolling wheel 102 rides on the protruding part t (the projections 103a are inclined), drop or sinking of the rolling wheel 102 has not been dissolved yet. Therefore, sufficient effects cannot be obtained as measures for lessening the vibrations.

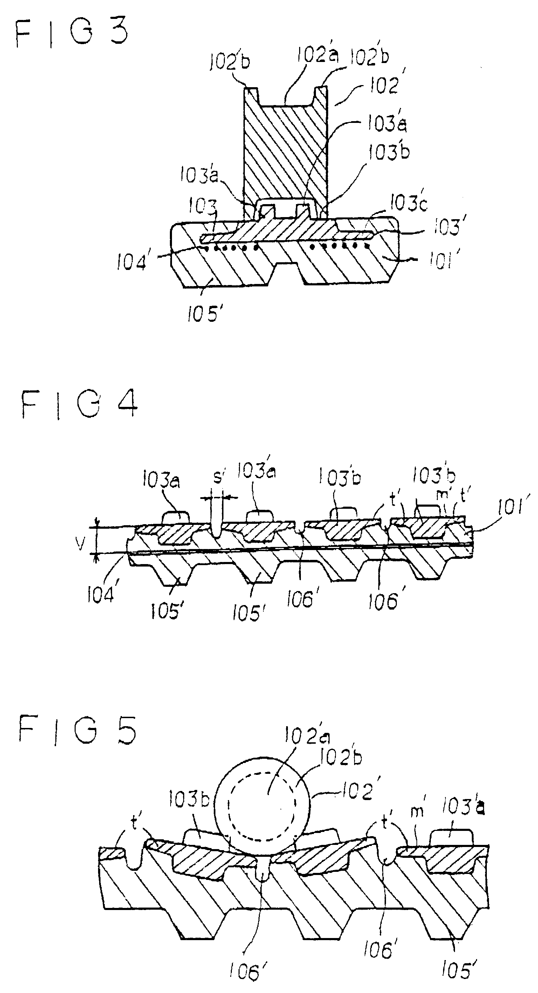

The above description deals with a case that a middle-flanged rolling wheel 102 is provided. FIG. 3 is a cross sectional view in the width direction, showing the relationship between the rubber crawler 102' and an outer-flanged rolling wheel 102' the shape of which is different from that of the above case. In Figure 3, 102'a and 102'b are an inner wheel and outer flanges of the outer-flanged rolling wheel 102', respectively, 103' is a core bar member, 103'a is a projection, 103'b is a stepped shoulder provided at the outside of the projection 103'a with which the outer flanges 102'b of the outer flanged wheel 102' are brought into contact and run thereon. The stepped shoulders 103'b are formed at a position which is higher in level by one step than a wing portion 103'c of the core bar member 103'. 104' is a steel cord, and 105' is a lug.

FIG. 4 is a cross sectional view in the circumferential direction of the rubber crawler 101' in the above embodiment. In Figure 4, t' is a protruding part of the stepped shoulder 103'b, s' is the interval between the core bar members, v is the interval between the steel cord 104' and the stepped shoulder 103'c, and 106' is a recess groove provided between the core bar members 103'.

As shown in the Figure, the stepped shoulder 103'b is concealed in such a manner that the top face m' thereof can be exposed out of rubber base material of the rubber crawler 101', and as the interval s' between the core bar members 103' and the interval v between the stepped shoulder 103'b and the steel cord 104' are made comparatively small, the ratio of compression of the interval between the core bar members 103' which are compressed inwardly of the steel cords 104' at the turning portions to a drive sprocket wheel and an idler tumbler wheel is made comparatively small as well. Therefore, the rolling vibration can be decreased and ensures a comparatively good feeling of riding. However, as shown in FIG. 5, when the rolling wheels are positioned in between the core bar members 103', drop or sinking of the protruding parts t', t' is caused to occur due to the rolling load, and vibrations are still resulting therefrom.

It is therefore an object of the present invention to decrease such vibrations as much as possible by lessening the drop or sinking of the rolling wheels.

The present invention relates to a core bar member 1; 21 for a rubber crawler 2; 22 which includes:
- a pair of projections 1 a; 21 a, each of said projections 1 a; 21 a having an upper face m and protruding upwardly to a fixed height;
- right and left wing portions 1 c; 21 c;
- said upper faces m of said pair of projections 1 a; 21 a having protruding parts t; 21 t of a fixed length in the width direction of said left and right wing portions 1 c; 21 c;
- the upper faces m of said projections 1 a; 21 a including said protruding parts t; 21 t being upwardly arcuate and having a center portion c with said center portion c of said upwardly arcuate protruding parts t; 21 t being the bottom thereof.

The invention also relates to a core bar member 31 for a rubber crawler 32 which includes
- a pair of projections 31 a, each of said projections 31 a having an upper face m' and being protruding upwardly to a fixed height;
- right and left wing portions 31 c;
- said upper faces m' of said pair of projections 31 a having protruding parts 31 t of a fixed length in the width direction of said left and right wing portions 31 c;
- said pair of upper faces m' of said projections 31 a being inclined upwardly in opposing directions to each other, respectively.

The invention also relates to a core bar member 41 for a rubber crawler 42 which includes
- a pair of projections 41 a, said pair of projections 41 a protruding upwardly to a fixed height;
- right and left wing portions 41 c;
- a pair of stepped shoulders 41 d, each said stepped shoulder 41 d being on the exterior of one of said projections 41 a, having an upper face m and extending higher by a step than the associated wing portion 41 c;
- each said stepped shoulder 41 d having forward and rearward protruding parts t extending a fixed length in the width direction of the associated wing portions 41 c;
- said upper face m of each said stepped shoulder 41 d being gradually inclined upwardly toward the said forward and rearward protruding portions t from the region of the center thereof.

The invention furthermore relates to a core bar member 41'' for a rubber crawler 42 which includes
- a pair of projections 41'' a, said pair of projections 41'' a protruding upwardly to a fixed height;
- right and left wing portions 41'' c;
- a pair of stepped shoulders 41'' d, each said stepped shoulder 41'' d being on the exterior of one of said projections 41'' a, having an upper face m and extending higher by a step than the associated wing portion 41'' c;
- each said stepped shoulder 41'' d having a protruding part t extending a fixed length along one side of the width direction of the associated wing portion 41'' c,
   each said protruding portion t protruding in a direction opposite to the direction of the other protruding part t;
- said upper face m of each said stepped shoulder 41'' d being gradually inclined upwardly toward the side of the protruding part t.

The invention also relates to a rubber crawler 2; 22; 32 comprising plural core bar members 1; 21; 31 according to any of the claims 1 to 3 arrayed and concealed with a fixed interval such that the projections 1 a; 21 a; 31 a protrude in the width direction on the inner circumferential face of said rubber crawler 2; 22; 32.

Finally, the invention also relates to a rubber crawler 42 comprising plural core bar members 41; 41'; 41'' according to any of the claims 4 to 7 arrayed and concealed with a fixed interval such that the projections 41 a; 41' a; 41'' a protrude in the width direction on the inner circumferential face of the rubber crawler 42.

### Construction of the first embodiment of the invention

The first embodiment of the invention is characterized in core bar members for a middle-flanged rolling wheel, and as shown in the claim 1 hereof, the core bar members are composed so that a pair of projection upper faces which protrude upwardly to a fixed height and have a protruding part of a fixed length in the direction of wing portions are forming a track of rolling, and they are featured in that the left and right projections including the protruding parts are formed to be arcuate on their top face with almost the center part thereof being the bottom.

### Construction of the second embodiment of the invention

The second embodiment of the invention is characterized in a rubber crawler in which the core bar members of the above construction are utilized, as defined in the claim 8 hereof, and it features that a plurality of the core bar members are concealed in parallel with a fixed interval under such a state that projections which have been formed arcuately in the width direction of the inner circumferential side of rubber crawlers are projected.

The rubber crawlers in which core bar members are concealed can improve the defects of conventional ones as shown below;
(1). As the rolling wheel part rides on the protruding part of one of the core bar members, the protruding part thereof drops or sinks, and the range from the protruding part to the center point of the top face thereof is made almost parallel to the inner circumferential face of the crawler. Then, the inclination of the top race is gradually restored as the rolling wheel part rolls toward the center point from the protruding part, and the rolling wheel can go almost on an fixed height from the inner circumferential face of rubber crawler therebetween.
(2). Next, the protruding part gradually drops or sinks as the rolling wheel part advances on the top face to the other protruding part of the core bar members from the center point. Then, the rolling wheel can still go almost on an fixed height from the inner circumferential face of rubber crawler therebetween.
(3). As a result, the rolling wheel can go almost on an fixed height over full range of the top face of the projections.
(4). Furthermore, as the protruding part gradually approaches the protruding part of a next core bar member adjacent in the circumferential direction when the projection part drops or sinks, the interval between the core bar members can be shortened as much as possible.

In the present invention, in the case that the protruding parts in a pair of left and right projections are formed so that they protrude only in one direction contrary to each other and are concealed like zigzag in the rubber crawler, the same action as described above can be achieved (Claim 2). In such an embodiment, even if the interval between the adjacent core bar members is sufficiently secured in order to prevent a problem which may occur at the turning part at the point of drive sprocket wheel, namely, collision between core bar members mutually adjacent to each other forwards and backwards in the circumferential direction of the rubber crawler, the interval between the protruding parts can be much reduced. Therefore, the rolling track can be made almost continuous and the present embodiment is remarkable in getting rid of drop or sinking of the rolling wheels.

The above protruding parts are all formed to be arcuate. However, it is all right if the top face of left and right projections including the protruding parts is formed to be of inclination uprising toward the side opposite to each other (Claim 3).

### Construction of the third embodiment of the invention

The third embodiment of the invention is characterized in a core bar member for outer-flanged rolling wheels. As defined in the claim 4, the core bar member is such that a part of left and right wing portions at the outside of a pair of projections which protrude to a fixed height upwards is formed to be a pair of stepped shoulders which are higher in level by one step than the height of the wing portions, and each of the stepped shoulders is made a running face of the rolling wheel. And the core bar member features that a protruding part which protrudes by a fixed length forwards and backwards in the width direction of the wing portions is formed at each of the stepped shoulder and the upper face of each of the stepped shoulders is composed to be of uprising inclination which becomes higher in level from the neighborhood thereof toward to the front and rear protruding parts.

### Construction of the fourth embodiment of the invention

The fourth embodiment of the invention is characterized in a rubber crawler in which the core bar members of the above construction are utilized and it features that, as shown in claim 9, a plurality of the core bar members are concealed with a fixed interval in the width direction of the inner circumferential face of the rubber crawler under such a state that the upper face of each of the stepped shoulder is exposed to the inner circumferential face of the rubber crawler.

Therefore, the rubber crawlers in which core bar members are concealed can improve the defects of conventional ones as shown below;
(1). As the protruding part drops or sinks when the outer flanges ride on the protruding part of the stepped shoulder, the upper face of the stepped shoulder is made almost parallel to the inner circumferential face of the crawler, and as the outer flanges thereof go on the upper face of the stepped shoulder from the protruding part toward the center part of the core bar member, the inclination of the upper face of the stepped shoulder can be gradually restored, and the outer flanges will be made to advance almost at a fixed height from the inner circumferential face therebetween.
(2). Next, as the protruding part gradually drops or sinks in accompanying with advancement of the outer flanges on the upper face of the stepped shoulder from the center part to the protruding part, the outer flanges can go almost on the same fixed height from the inner circumferential face therebetween.
   Therefore, as a result, the rolling wheel can run on a similar height position over full range of the upper face of left and right stepped shoulder. In this case, when the protruding part drops or sinks, the protruding part gradually approaches the stepped shoulder of the next core bar member adjacent in the circumferential direction, thereby causing the interval between the core bar members to be narrowed as much as possible. So, the rolling track is made almost continuous, and it is attempted that the rolling vibrations can be lessened as much as possible.

It is all right that the shape between the front and rear protruding parts in the width direction of left and right wing portions in each of the stepped shoulders is made low similarly to the height of the wing portions in the core bar members of the present invention (Claim 5), and it is all right that the upper face of each of the stepped shoulders is formed to be of inclined face with the protruding part aide made higher in level by making each of the stepped shoulders a protruding part only at one side in the width direction of the wing portions and the respective protruding parts contrary to each other at the left and right positions (Claim 6). In the above construction, as the outer flanges of the rolling wheel push and compress only the protruding part of each of the stepped shoulders, it is remarkable to reduce the width dimension of the outer flanges of the rolling wheel.

It is all right that the base part of projection of the core bar members is composed so as to protrude toward the side contrary to the protruding side of stepped shoulders in the present invention (Claim 7). With this composition, respective corners and stepped shoulders between adjacent core bar members do not cause large distortion as they can be brought, from time to time, into contact with each other against such force as distortion, etc. Therefore, it has a remarkable effect in preventing the wheels from slipping off.

The invention is further explained by means of drawings wherein
- FIG. 1 is a cross sectional view, in the width direction, of a conventional rubber crawler in which middle-flanged rolling wheels are used;
- FIG. 2 is a side elevation view thereof in the circumferential direction;
- FIG. 3 is a cross sectional view, in the width direction, of a conventional rubber crawler in which outer-flanged rolling wheels are used;
- FIG. 4 is a side elevation view thereof in the circumferential direction;
- FIG. 5 is a descriptive view for explaining the actions thereof,
- FIG. 6 through FIG. 8 show the first embodiment of the invention; FIG. 6 is a perspective view of a core bar member for a middle-flanged rolling wheel; FIG. 7 shows a core bar member of another embodiment; FIG. 7A is a plan view thereof; FIG. 7B is a side elevation view thereof; and FIG. 8 is a perspective view of a core bar member of another embodiment of the invention;

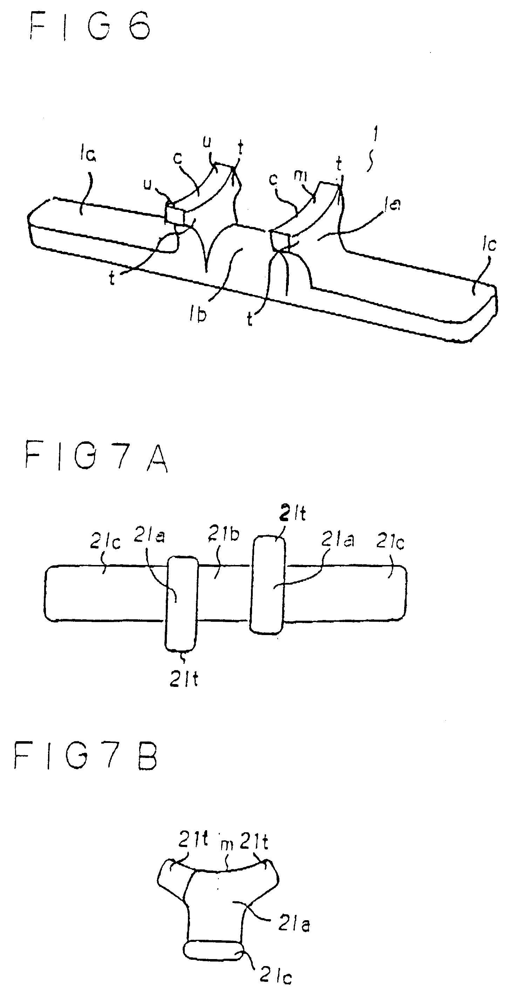

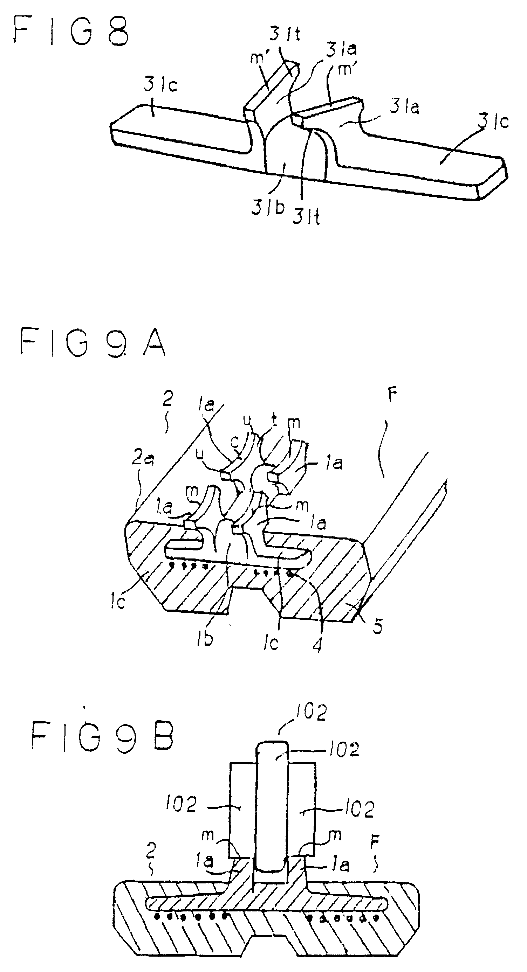

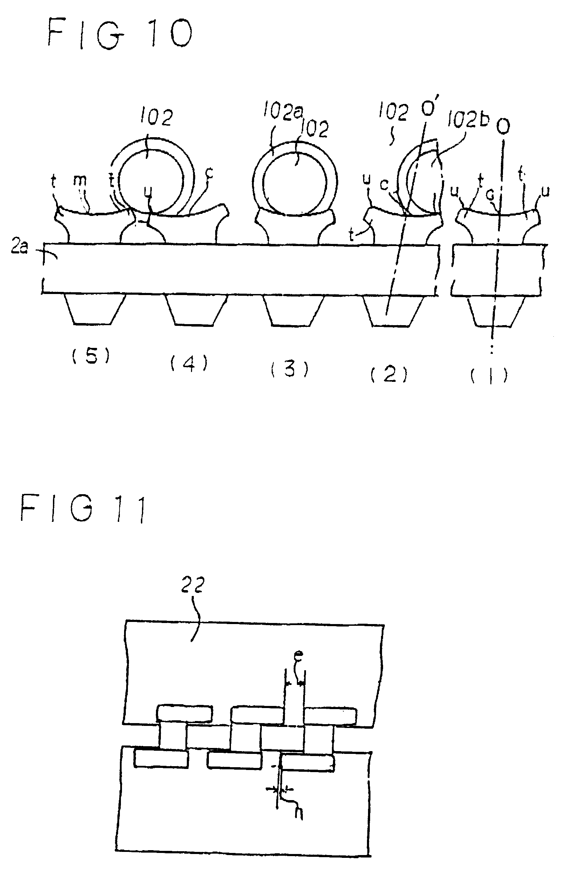

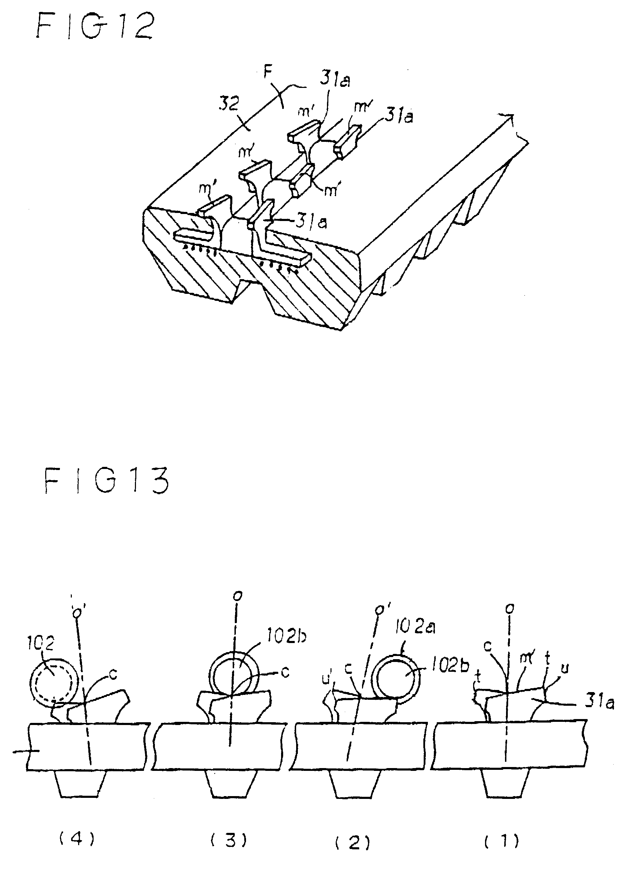

- FIG. 9 through FIG. 13 show the second embodiment of the invention; FIG. 9A is a partially broken perspective view of a rubber crawler in which a core bar member according to FIG. 6 is concealed; FIG. 9B is an explanatory view to explain the section showing the engaged status with a roller wheel; FIG. 10 is an explanatory view to explain the actions when a rolling wheel rolls on the above rubber crawler; FIG. 11 is plan view of the rubber crawler in which a core bar member according to FIG. 7 is concealed; FIG. 12 is a partially broken perspective view of the rubber crawler in which a core bar member according to FIG. 8 is concealed; and FIG. 13 is an explanatory view to explain the actions thereof,
   FIG. 14 through FIG. 16 show the third embodiment invention; FIG. 14 is a perspective view of a core bar member for outer flanged rolling wheel; FIG. 15 and FIG. 16 are perspective views showing a core bar member according to another embodiment of the invention;

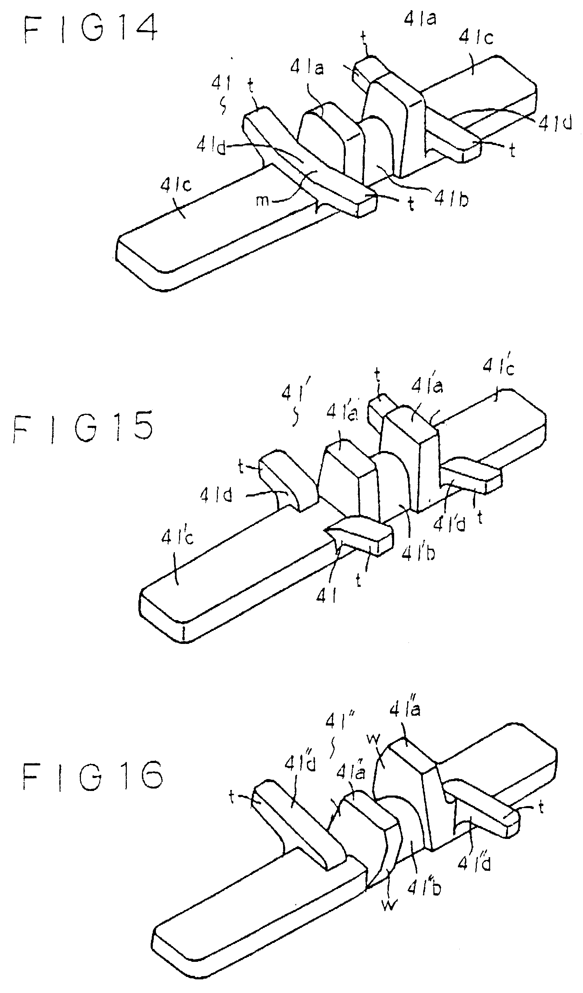

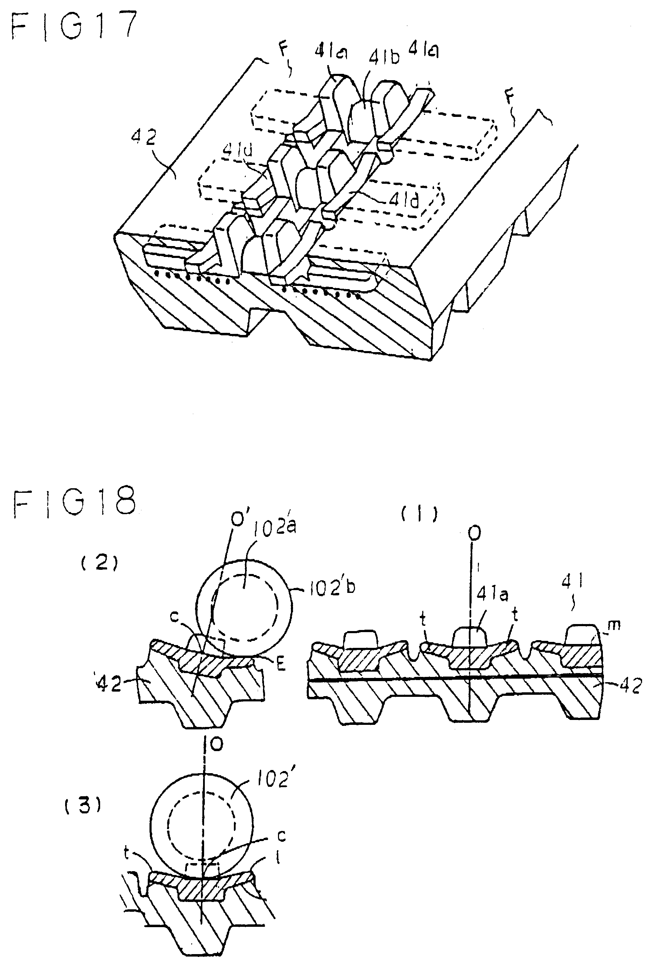

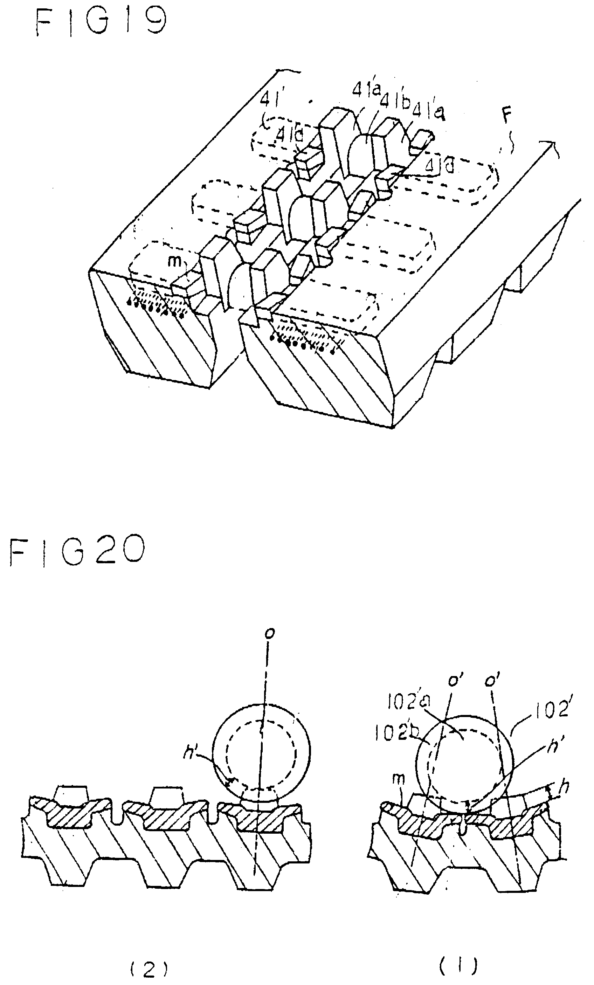

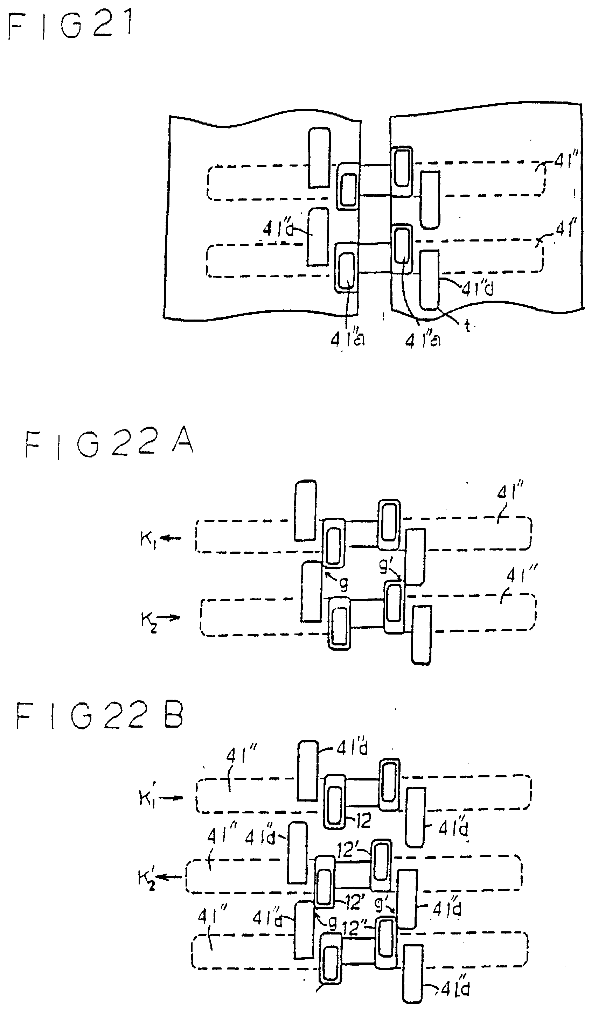

   FIG. 17 through FIG. 22 show the fourth embodiment of the invention; FIG. 17 is a partially broken perspective view showing a rubber crawler in which a core bar member according to FIG. 14 is concealed; FIG. 18 (1), (2) and (3) are explanatory views to explain the actions when the rolling wheel rolls on the above rubber crawler; FIG. 19 is a partially broken perspective view showing the rubber crawler in which the core bar member according to FIG. 15 is concealed; FIG. 20 (1) and (2) are explanatory views to explain the actions when the roller wheel rolls on the rubber crawler; FIG. 21 is a plan view of a rubber crawler in which the core bar member according to FIG. 16 is concealed; FIG. 22 A and B are explanatory views to explain the action of the rubber crawler.

A preferred embodiment according to the first embodiment of the invention is described with reference to FIG. 6 through FIG. 8. In FIG. 6, 1 is a core bar member; 1a, 1b and 1c are a projections, an engaged portion with a drive sprocket wheel, and a wing portion, respectively; m and t are the top face and protruding part of the projection 1a, respectively. U and C are the end part and center point of the top face m, respectively. (O is the center line of the projection 1a).

Here, the protruding parts t, t are provided before and behind the projection 1a, and the top face m is formed to be upwardly arcuate with the neighborhood of the center point C being the bottom thereof and the general sectional shape is roughly Y-shaped.

Therefore, the middle engaged portion 1b is shaped almost identically to the tooth bottom of the drive sprocket wheel in order to be engaged with the drive sprocket wheel (In the present preferred embodiment, it has been of semi-circular column on the section thereof). The wing portion 1c is like a stripe of plate. Either of them may be of the same shape as that of an already known core bar member of rubber crawler.

FIG. 7 A and B show the core bar member of another embodiment for a rubber crawler. 21 is a core bar member, 21a is a projection, 21b is an engaged portion, 21c is a wing portion, 21t is a protruding part, and m is the top face. The present embodiment is such that the protruding part 21t is provided only on either of the left and right projections 21a or 21a and so as to be like zigzag opposite to each other at the left and right wing portion sides.

FIG. 8 shows a core bar member according to still another embodiment, and although the top face of projections is formed to be upwardly arcuate in each of the above embodiments, the present preferred embodiment is constructed so that the respective top faces m' of left and right projections 31a, 31a are formed to be of uprising inclination opposite to each other toward the protruding part side.

The preferred embodiment of the second embodiment of the invention is described with reference to FIG. 9 through FIG. 13. FIG. 9A shows a rubber crawler 2 in which the core bar member described in FIG. 6 is concealed. In the FIGURE, 2a is a crawler body, F is the inner circumferential face of the crawler body 2a, 4 are steel cords, 5 is a lug.

In the present invention, as shown in FIG. 9B, projections 1a, 1a, ... are arrayed in left and right two rows in the circumferential direction on the inner circumferential face F of the rubber crawler. The left and right side wheels 102b, 102b of a rolling wheel 102 (in the present embodiment, middle-flanged rolling wheel) roll on the left and right top faces m, m, respectively.

FIG. 10 is a side elevation view of the rubber crawler according to FIG. 9, and is an explanatory view to explain the actions when the rolling wheel 102 rolls on the top face m. As shown in Fig. 10 (1), the protruding parts t, t protrude arcuately diagonally upwards at both the sides of the center line O. Therefore, as shown in FIG. 10 (2), distortion may be generated at the surrounding of the concealing portion of the core bar member 1 inside the crawler body 2a when the side wheel 102b rides on one edge portion U of the top face m, and the center line is inclined to become O', thereby causing the protruding part t to drop or sink. The range from the dropped or sunk edge portion U to the vicinity of the center point C is made almost parallel to the inner circumferential face F. In this case, the dropped or sunk protruding part t approaches the mating protruding part t, thereby causing the interval between the core bar members to be shortened.

Next, as the side wheel 102b rolls toward the center point C, the protruding part t is gradually floated and the inclination of the top face m is gradually restored. During this interval, the side wheel 102b goes almost on a fixed height, and as shown in FIG. 10 (3), when the side wheel 102b reaches the center point C, the inclination of the top face m is restored, and furthermore the side wheel 102b rolls from the center point C to the other edge portion U. Then, when the side wheel reaches the edge portion U, the range from the dropped or sunk edge portion U to the vicinity of the center point C is made almost parallel to the inner circumferential face F. Accordingly, the side wheel 102b goes almost on a fixed height over the range. (FIG. 10 (4) and (5)).

As a result, the rolling wheel can go at a fixed height over full range of the edge portions U, U. Moreover, when the rolling wheel 102 rides on the edge portion U of another core bar member, the protruding part t approaches the adjacent protruding part t, thereby causing the interval between the core bar members to be shortened. Therefore, drop or sinking of the rolling wheel can be remarkably decreased.

FIG. 11 shows a rubber crawler 22 in which the core bar member described in FIG. 7 is concealed. At this time, e is the interval between the core bar members, n is the interval between the protruding parts. As shown in this FIGURE, it is possible to make the interval n between the protruding parts sufficiently small for the interval e between the core bar members. Even though the interval e between the core bar members to formed so as to have sufficient dimension in order prevent collision of the core bar members before and behind in the circumferential direction of the rubber crawlers at the turning part of drive sprocket wheel, etc., it is possible to make the interval n between the protruding parts small. Therefore, the rolling track can be made almost continuous and the rolling wheels can be almost prevented from drop or sinking.

FIG. 12 is a rubber crawler 32 in which the core bar member according to FIG. 8 is concealed, and the uprising inclination of the top faces m', m' of the left and right projections 31a, 31a is opposite to each other and is determined in the same direction at the same row thereof. When the rolling wheel 102 rolls on the top face m', the action thereof is as follows:

FIG. 13 is an explanatory view to explain the action thereof. Firstly, in FIG. 13 (1), O is the center line of the projection body 31, and as shown in the FIGURE, the protruding parts t, t of the projection bodies 31a, 31a which are opposed at this side and the back side of the drawing protrude diagonally upwards at both the sides of the center line O. As shown in FIG. 13 (2), when the side wheel 102b of this side rides on the side edge part U of the protruding part of the top face m', distortion may be generated at the surrounding of the concealing portion of the core bar member 3 inside the crawler body 32, and the center line is inclined and becomes O', thereby causing the protruding part t to drop or sink, and the top face m' is made almost parallel to the inner circumferential race F. In this case, as soon as the protruding part t drops or sinks, it approaches the the adjacent projection 31a and shortens the interval between two core bar members. Thus, the rolling track is made almost continuous. Next, as the side wheel 102b advances toward the center point C, the protruding part t is gradually floated, and the inclination of the top face m' can be restored. During this interval, the side wheel 102b can advance almost on a fixed height (During this time, the side wheel 102b at the back of the drawing is above between the side edge part U' of non-protruding part and center point C of the top face m' of the same side, and is not engaged with the top face m'). As the side wheel further advances, the side wheel 102b at the back side of the drawing will be caused to roll between the center point C of the top face m' of the same side and the side edge part U of the protruding part, and the protruding part t at the back side of the drawing is gradually dropped or sunk (Also, during this time, as soon as the protruding part t drops or sinks, it approaches the adjacent projection body 31a and the rolling tracks is made almost continuous). As shown in FIG. 13 (4), the top face m' is made almost parallel to the inner circumferential face F when the side wheel 102b reaches the side edge part U of the protruding part. As well as with the embodiment described above, the side wheel 102b can advance almost on a fixed height during this interval. (However, the side wheel part 102b of this side of the drawing is above between the center point C of the top face m' of the same side and the side edge part U of the non-protruding part and is not engaged with the top face m'). As a result, in the FIGURE, the rolling wheel 102b can advance almost on a fixed height in full range between the side edge parts U, U of the protruding part of the respective top faces m' at this side and the back side of the drawing, and furthermore, as the protruding part t approaches the adjacent projection body 31a when the rolling wheel is at the side edge part U of the protruding part, the rolling track is made continuous and the rolling wheel can be prevented from dropping or sinking.

A preferred embodiment of the third embodiment of the invention is described with reference to FIG. 14 through FIG. 16.

In FIG. 14, 41 is a core bar member, 41a, 41b and 41c are a projection of the core bar member, engaged portion with the drive sprocket wheel and a wing portion, respectively. And 41d is a stepped shoulder at which protruding parts are formed to be higher in level by one step than each of the wing portions, in the vicinity of the boundary of the outside of each projection 41a, and protrude forwards and backwards of the width of wing portion, the upper face m of the stepped shoulder is flat in the width of wing portion and is upwardly inclined toward the protruding portion t.

FIG. 15 shows a case of a core bar member 41 wherein the intermediate portion between the front and back protruding parts t, t of each stepped shoulder 41d of the above embodiment is made lower in level by one step, namely the flat portion is omitted and is concurrently used as wing portion 41c.

In the above embodiment, each of the stepped shoulders 41d, 41d' is protruded by a fixed length in both the front and back directions of the core wing portions 41c, 41c'. However, the protruding part t is provided only in a direction opposite to each other in the core bar member 41'' of FIG. 16, and moreover one side edge of each projection 41'' is projected (w) a little toward the side contrary to the direction along which the stepped shoulder protrudes.

A preferred embodiment of the fourth embodiment of the invention is described with reference to FIG. 17 through FIG. 22.

FIG. 17 shows a rubber crawler 42 in which a core bar member 41 described in FIG. 14 is concealed. FIG. 18 is an explanatory view to explain the action when the rolling wheel runs. In FIG. 18 (1), O is the center line of the core bar member. As shown in the drawing, the protruding parts t, t protrude diagonally upwards at both the sides of the center line O. As shown in FIG. 18 (2), distortion may be generated at the surrounding of the concealing portion of the core bar member 41 inside the crawler 42 when the outer flanges 102'b of the outer-flanged rolling wheel 102 ride on the edge portion of the protruding part t, and the center line thereof is inclined and becomes O' and the protruding part t drops and sinks. Then, the upper face thereof is made almost parallel to the inner circumferential face F of the crawler. In this case, as soon as the protruding part t drops or sinks, it approaches the adjacent protruding part t, thereby causing the interval between the core bar members to be shortened and causing the rolling track to be made almost continuous. Next, as the outer flanges 102'b advance toward the center point C, the protruding part t is gradually restored. During this time, the outer flanges 102'b can advance almost on a fixed height.

In FIG. 18 (3), the rolling wheel 102' reaches the center point C, inclination of the upper face m thereof is restored, and the rolling wheel 102' further advances, the outer flanges 102'b is caused to roll between the center point C of the upper face m and the side edge portion t of the protruding part. Accordingly, the other protruding part t gradually drops or sinks, and the outer flanges 102'b can advance almost on a fixed height during this time as well.

As a result, the rolling wheel 102 can advance on the same height over full range between the protruding part sides t, t of the upper face m. Moreover, as the protruding part t approaches the adjacent protruding part when the rolling wheel 102' is on the side edge portion of the protruding part, the rolling track is made continuous, and the rolling wheel 102' can be prevented from dropping or sinking.

FIG. 19 shows a rubber crawler device in which the core bar member 41' according to FIG. 15 is concealed. The intermediate portion between the protruding parts t, t arrayed in the same row on the inner circumferential face F is constructed so that it can be made furthermore lower by one step.

FIG. 20 (1) and (2) are explanatory views to explain the action when the rolling wheel rolls on the rubber crawler. The inner wheel 102'a and outer flanges 102'b of the rolling wheel 102' are constructed so that they are kept in contact with the top face of the projection and the upper face m of the protruding part t. For this reason, the step gap h between the top face and the upper face of the stepped shoulder is made to be of the same dimension as that of the step gap h' between the inner wheel 102'a and the outer flanges 102'b. Here, as shown in FIG. 20 (1), when the roller wheel 102 is placed on the projection, the inner wheel 102'a rides on the top face and the projection supports the load of rolling wheel.

FIG. 21 is a plan view of the rubber crawler device in which the core bar member 41'' according to FIG. 16 is concealed, and FIG. 22 (A) and (B) are explanatory views to explain the action of the rubber crawler device.

As shown in FIG. 22A, in this preferred embodiment, in the case that a force which produces distortion in the direction of arrows k1, k2 acts in the crawler body, the respective projection and stepped shoulder confronting thereto between the adjacent core bar members 41'', 41'' will be brought (g, g') into contact with each other. To the contrary, as shown in FIG. 22B, although contact between the projection and the stepped shoulder is not obtained between the core bar members 41'', 41'' for the distortion in the direction of arrows K1', K2' in the crawler body, the same relation as that in FIG. 22(A) is established between the core bar members 41'', 41''. Accordingly, the projection and the stepped shoulder are brought into contact with each other, thereby causing local distortion not to be produced, and it can be attempted that the rolling wheels are completely prevented from slipping off.

As described above, a core bar member according to the present invention and a rubber crawler in which such a core bar member is utilized are used in such a type of transportable construction equipments, etc. wherein middle-flanged rolling wheels and outer-flanged rolling wheels are adopted, and contribution to promotion of the work efficiency will be great and remarkable.

## Claims

1. A core bar member (1; 21) for a rubber crawler (2; 22) which includes:
- a pair of projections (1 a; 21 a), each of said projections (1 a; 21 a) having an upper face (m) and protruding upwardly to a fixed height;
- right and left wing portions (1 c; 21 c);
- said upper faces (m) of said pair of projections (1 a; 21 a) having protruding parts (t; 21 t) of a fixed length in the width direction of said left and right wing portions (1 c; 21 c);
- the upper faces (m) of said projections (1 a; 21 a) including said protruding parts (t; 21 t) being upwardly arcuate and having a center portion (c) with said center portion (c) of said upwardly arcuate protruding parts (t; 21 t) being the bottom thereof.

2. The core bar member (21) for a rubber crawler (22) according to claim 1, wherein only one protruding part (21 t) is provided on each of said pair of projections (21 a) whereby said protruding parts (21 t) on each pair of projections (21 a) extend in opposing directions to each other.

3. A core bar member (31) for a rubber crawler (32) which includes
- a pair of projections (31 a), each of said projections (31 a) having an upper face (m') and being protruding upwardly to a fixed height;
- right and left wing portions (31 c);
- said upper faces (m') of said pair of projections (31 a) having protruding parts (31 t) of a fixed length in the width direction of said left and right wing portions (31 c);
- said pair of upper faces (m') of said projections (31 a) being inclined upwardly in opposing directions to each other, respectively.

4. A core bar member (41) for a rubber crawler (42) which includes
- a pair of projections (41 a), said pair of projections (41 a) protruding upwardly to a fixed height;
- right and left wing portions (41 c);
- a pair of stepped shoulders (41 d), each said stepped shoulder (41 d) being on the exterior of one of said projections (41 a), having an upper face (m) and extending higher by a step than the associated wing portion (41 c);
- each said stepped shoulder (41 d) having forward and rearward protruding parts (t) extending a fixed length in the width direction of the associated wing portions (41 c);
- said upper face (m) of each said stepped shoulder (41 d) being gradually inclined upwardly toward the said forward and rearward protruding portions (t) from the region of the center thereof.

5. The core bar member (41') according to claim 4, wherein at each said stepped shoulder (41' d) the intermediate portion between said forward and rearward protruding parts (t) in the width direction of said right and left wing portions (41' c) is sufficiently low to be substantially in level with said wing portions (41' c).

6. A core bar member (41'') for a rubber crawler (42) which includes
- a pair of projections (41'' a), said pair of projections (41'' a) protruding upwardly to a fixed height;
- right and left wing portions (41'' c);
- a pair of stepped shoulders (41'' d), each said stepped shoulder (41'' d) being on the exterior of one of said projections (41'' a), having an upper face (m) and extending higher by a step than the associated wing portion (41'' c);
- each said stepped shoulder (41'' d) having a protruding part (t) extending a fixed length along one side of the width direction of the associated wing portion (41'' c), each said protruding portion (t) protruding in a direction opposite to the direction of the other protruding part (t);
- said upper face (m) of each said stepped shoulder (41'' d) being gradually inclined upwardly toward the side of the protruding part (t).

7. The core bar member (41'') according to claim 6, wherein each of said projections (41'' a) has a base portion (w), said base portions (w) protruding in opposing directions toward said protruding part (t) of each said stepped shoulders (41'' d).

8. A rubber crawler (2; 22; 32) comprising plural core bar members (1; 21; 31) according to any of the claims 1 to 3 arrayed and concealed with a fixed interval such that the projections (1 a; 21 a; 31 a) protrude in the width direction on the inner circumferential face of said rubber crawler (2; 22; 32).

9. A rubber crawler (42) comprising plural core bar members (41; 41'; 41'') according to any of the claims 4 to 7 arrayed and concealed with a fixed interval such that the projections (41 a; 41' a; 41'' a) protrude in the width direction on the inner circumferential face of the rubber crawler (42).

## Patentansprüche

1. Kernmetall-Teil (1; 21) für eine Laufkette aus Kautschuk (2; 22), welches einschließt:
- ein Paar Vorsprünge (1a; 21a), wobei jeder der Vorsprünge (1a; 21a) eine Oberseite (m) aufweist und nach oben bis zu einer festgelegten Höhe vorsteht;
- rechte und linke Flügelabschnitte (1c; 21c);
- wobei die Oberseiten (m) des Paars Vorsprünge (1a; 21a) vorspringende Teile (t; 21t) einer festgelegten Länge in der Breitenrichtung der linken und rechten Flügelabschnitte (1c; 21c) aufweisen; und
- wobei die Oberseiten (m) der Vorsprünge (1a; 21a) die vorspringenden Teile (t; 21t) einschließen, die nach oben gebogen sind und einen zentralen Abschnitt (c) aufweisen, wobei der zentrale Abschnitt (c) der nach oben gebogenen vorspringenden Teile (t; 21t) deren unterer Teil ist.

2. Kernmetall-Teil (21) für eine Laufkette aus Kautschuk (22) nach Anspruch 1, worin nur ein vorstehender Teil (21t) an jedem einzelnen des Paars Vorsprünge (21a) vorgesehen ist, wobei sich die vorspringenden Teile (21t) an jedem einzelnen des Paars Vorsprünge (21a) in zueinander entgegengesetzten Richtungen erstrecken.

3. Kernmetall-Teil (31) für eine Laufkette aus Kautschuk (32), welches einschließt:
- ein Paar Vorsprünge (31a), wobei jeder der Vorsprünge (31a) eine Oberseite (m') aufweist und nach oben bis zu einer festgelegten Höhe vorsteht;
- rechte und linke Flügelabschnitte (31c);
- wobei die Oberseiten (m') des Paars Vorsprünge (31a) vorspringende Teile (31t) einer festgelegten Länge in der Breitenrichtung der linken und rechten Flügelabschnitte (31c) aufweisen; und
- wobei das Paar Oberseiten (m') der Vorsprünge (31a) nach oben in jeweils zueinander gegenläufige Richtungen geneigt ist.

4. Kernmetall-Teil (41) für eine Laufkette aus Kautschuk (42), welches einschließt:
- ein Paar Vorsprünge (41a), wobei das Paar Vorsprünge (41a) nach oben bis zu einer festgelegten Höhe vorsteht;
- rechte und linke Flügelabschnitte (41c);
- ein Paar abgestufter Schultern (41d), wobei jede abgestufte Schulter (41d) auf der Außenseite eines der Vorsprünge (41a) angeordnet ist, eine Oberseite (m) aufweist und sich um eine Stufe höher erstreckt als der zugehörige Flügelabschnitt (41c);
- wobei jede abgestufte Schulter (41d) nach vorne und nach hinten vorstehende Teile (t) aufweist, die sich in einer festgesetzten Länge in der Breitenrichtung der zugehörigen Flügelabschnitte (41c) erstrecken; und
- wobei jede Oberseite (m) jeder abgestuften Schulter (41d) vom Bereich ihres Zentrums fortschreitend nach oben in Richtung auf die nach vorne und die nach hinten vorstehenden Abschnitte (t) geneigt ist.

5. Kernmetall-Teil (41') nach Anspruch 4, worin an jeder abgestuften Schulter (41'd) der Zwischenabschnitt zwischen den nach vorne und den nach hinten vorstehenden Teilen (t) in der Breitenrichtung der rechten und linken Flügelabschnitte (41'c) ausreichend niedrig ist, daß er im wesentlichen in gleicher Höhe ist wie die Flügelabschnitte (41'c).

6. Kernmetall-Teil (41'') für eine Laufkette aus Kautschuk (42), welches einschließt:
- ein Paar Vorsprünge (41''a), wobei das Paar Vorsprünge (41''a) nach oben bis zu einer festgelegten Höhe vorsteht;
- rechte und linke Flügelabschnitte (41''c);
- ein Paar abgestufter Schultern (41''d), wobei jede abgestufte Schulter (41''d) auf der Außenseite eines der Vorsprünge (41''a) angeordnet ist, eine Oberseite (m) aufweist und sich um eine Stufe höher erstreckt als der zugehörige Flügelabschnitt (41''c);
- wobei jede abgestufte Schulter (41''d) einen vorspringenden Teil (t) aufweist, der sich um eine festgesetzte Länge entlang einer Seite der Breitenrichtung des zugehörigen Flügelabschnitts (41''c) erstreckt, wobei jeder vorspringende Abschnitt (t) in einer Richtung vorspringt, die entgegengesetzt der Richtung des anderen vorspringenden Teils (t) ist; und
- die Oberseite (m) jeder abgestuften Schulter (41''d) zur Seite des vorspringenden Teils (t) fortschreitend nach oben geneigt ist.

7. Kernmetall-Teil (41'') nach Anspruch 6, worin jeder der Vorsprünge (41''a) einen Basisabschnitt (w) aufweist, wobei die Basisabschnitte (w) in entgegengesetzte Richtungen auf den vorspringenden Teil (t) jeder abgestuften Schulter (41''d) vorspringen.

8. Laufkette aus Kautschuk (2; 22; 32), umfassend mehrere Kernmetall-Teile (1; 21; 31) nach einem der Ansprüche 1 bis 3, die mit feststehendem Abstand angeordnet und eingebaut sind, so daß die Vorsprünge (1a; 21a; 31a) in der Breitenrichtung auf der Innenumfangsseite der Laufkette aus Kautschuk (2; 22; 32) vorspringen.

9. Laufkette aus Kautschuk (42), umfassend mehrere Kernmetall-Teile (41; 41'; 41'') nach einem der Ansprüche 4 bis 7, die mit feststehendem Abstand angeordnet und eingebaut sind, so daß die Vorsprünge (41a; 41'a; 41''a) in der Breitenrichtung auf der Innenumfangsseite der Laufkette aus Kautschuk (42) vorspringen.

## Revendications

1. Elément de barre de noyau (1,21) pour une chenille en caoutchouc (2,22) comprenant :
- une paire de saillies (1a, 21a), chacune desdites saillies (1a, 21a) ayant une face supérieure (m) et faisant saillie vers le haut vers une hauteur fixe ;
- des portions d'ailes droite et gauche (1c, 21c) ;
- lesdites faces supérieures (m) de ladite paire de saillies (1a, 21a) ayant des parties saillantes (t, 21t) d'une longueur fixe dans la direction de la largeur desdites portions d'ailes gauche et droite (1c, 21c) ;
- les faces supérieures (m) desdites saillies (1a, 21a) comprenant lesdites parties saillantes (t, 21t) étant courbées vers le haut et ayant une portion centrale (c) avec ladite portion centrale (c) desdites parties saillantes arquées vers le haut (t, 21t) définissant le fond de celles-ci.

2. Elément de barre de noyau (21) pour une chenille en caoutchouc (22) selon la revendication 1, dans lequel uniquement une partie saillante (21t) est prévue sur chacune de ladite paire de saillies (21a) de façon que lesdites parties saillantes (21t) sur chaque paire de saillies (21a) s'étendent dans des directions opposées l'une par rapport à l'autre.

3. Elément de barre de noyau (31) pour une chenille en caoutchouc (32) comprenant :
- une paire de saillies (31a), chacune desdites saillies (31a) ayant une face supérieure (m') et faisant saillie vers le haut vers une hauteur fixe ;
- des portions d'ailes droite et gauche (31c) ;
- lesdites faces supérieures (m') de ladite paire de saillies (31a) ayant des parties saillantes (31t) d'une longueur fixe dans la direction de la largeur desdites portions d'ailes gauche et droite (31c) ;
- ladite paire de faces supérieures (m') desdites saillies (31a) étant inclinées vers le haut dans des directions opposées l'une par rapport à l'autre respectivement.

4. Elément de barre de noyau (41) pour une chenille en caoutchouc (42) comprenant :
- une paire de saillies (41a), ladite paire de saillies (41a) faisant saillie vers le haut jusqu'à une hauteur fixée ;
- des portions d'aile droite et gauche (41c) ;
- une paire d'épaulements étagés (41d), chaque épaulement étagé (41d) étant sur l'extérieur de l'une desdites saillies (41a), ayant une face supérieure (m) et s'étendant plus haut d'un étage que la portion d'aile associée (41c) ;
- chaque épaulement étagé (41d) ayant des parties saillantes avant et arrière (t) s'étendant sur une longueur fixée dans la direction de la largeur des portions d'aile associées (41c) ;
- ladite face supérieure (m) de chaque épaulement étagé (41d) étant graduellement inclinée vers le haut vers lesdites portions saillantes avant et arrière (t) à partir de sa région de centre.

5. Elément de barre de noyau (41') selon la revendication 4, dans lequel à chaque épaulement étagé (41'd) la portion intermédiaire entre lesdites parties saillantes avant et arrière (t) dans la direction de la largeur desdites portions d'aile droite et gauche (41'c) est suffisamment basse pour être sensiblement au niveau desdites portions d'aile (41'c).

6. Elément de barre de noyau (41'') pour une chenille en caoutchouc (42) comprenant :
- une paire de saillies (41''a), ladite paire de saillies (41''a) faisant saillie vers le haut jusqu'à une hauteur fixée ;
- des portions d'aile droite et gauche (41''c) ;
- une paire d'épaulements étagés (41''d), chaque épaulement étagé (41''d) étant sur l'extérieur de l'une desdites saillies (41''a), ayant une face supérieure (m) et s'étendant plus haut d'un étage que la portion d'aile associée (41''c) ;
- chaque épaulement étagé (41''d) ayant une partie saillante (t) s'étendant sur une longueur fixée le long d'un côté dans la direction de la largeur de la portion d'aile associée (41''c), chaque portion saillante (t) faisant saillie dans une direction opposée à la direction de l'autre partie saillante (t) ;
- ladite face supérieure (m) de chaque épaulement étagé (41''d) étant graduellement inclinée vers le haut vers le côté de la partie saillante (t).

7. Elément de barre de noyau (41'') selon la revendication 6, dans lequel chacune desdites saillies (41''a) a une portion de base (w), lesdites portions de base (w) faisant saillie dans des directions opposées vers ladite partie saillante (t) de chacun desdits épaulements étagés (41''d).

8. Chenille en caoutchouc (2, 22, 32) comprenant plusieurs éléments de barre de noyau (1, 21, 31) selon l'une des revendications 1 à 3, agencés et masqués avec un intervalle fixé de façon que les saillies (1a, 21a, 31a) fassent saillie dans la direction de la largeur sur la face circonférentielle interne de la chenille en caoutchouc (2, 22, 32).

9. Chenille en caoutchouc (42) comprenant plusieurs éléments de barre de noyau (41, 41', 41'') selon l'une des revendications 4 à 7, agencés et masqués avec un intervalle fixé de façon que les saillies (41a, 41'a, 41''a) fassent saillie dans la direction de la largeur sur la face circonférentielle interne de la chenille en caoutchouc (42).
